# FASCICULE DE BREVET EUROPEEN

(11) **EP 0 532 425 B1**
(45) Date de publication et mention de la délivrance du brevet: **10.07.1996**
(21) Numéro de dépôt: 92402494.6
(22) Date de dépôt: 11.09.1992
(51) Int. Cl.: A47J 37/06

(54) **Appareil électrique de cuisson, notamment pour la viande**
Elektrisches Bratgerät, insbesondere für Fleisch
Electric cooking appliance, particularly for meat

(30) Priorité: 13.09.1991 FR 9111317
(43) Date de publication de la demande: 17.03.1993
(73) Titulaire: SEB S.A., F-69130 Ecully (FR)
(72) Inventeur: Guerrier, Didier, F-74150 Rumilly (FR); Gruaz, Denis, F-74000 Annecy (FR)
(74) Mandataire: Keib, Gérard

(56) Documents cités:
- CH-A- 348 487
- FR-A- 2 114 279
- FR-A- 2 390 137
- LU-A- 60 362
- US-A- 2 042 855
- US-A- 3 623 422

## Description

La présente invention concerne un appareil électrique pour la cuisson d'aliments tels que la viande, que l'on peut poser sur une table autour de laquelle sont installés des convives.

On connaît par le brevet LU-A-60 362 un appareil de cuisson d'aliments que l'on peut poser sur une table. Cependant cet appareil n'est ouvert que sur un seul côté et ne permet donc pas à tous les convives de suivre la cuisson des aliments.

On connaît également dans les documents FR-A-2 390 137 et US-A-2 042 855 des appareils qui comportent un socle et un montant relié à ce socle et à un capot supérieur réfléchissant disposé au-dessus de résistances. Ces appareils permettent de cuire des aliments contenus dans des récipients qui sont posés sur le socle. Ils n'autorisent pas par contre la cuisson d'aliments directement sur un support, tel qu'une grille, ce qui pourtant permet un mode de cuisson, de la viande notamment, beaucoup moins gras.

Les appareils connus permettant un tel mode de cuisson comprennent généralement un support tel qu'une grille pour recevoir les aliments à griller, sous laquelle s'étend une résistance électrique de chauffage. Sous la résistance est placé un récipient de collecte des graisses de cuisson. Ce récipient peut être rempli d'eau pour refroidir les graisses de cuisson et empêcher l'émission d'une odeur nauséabonde de graisse carbonisée. Un appareil de ce type est connu par le brevet US-A-3 623 422.

Toutefois, une partie de la graisse libérée lors de la cuisson tombe sur les résistances sur lesquelles elles sont carbonisées en produisant une fumée et une odeur désagréables pour les convives entourant la table.

La présente invention a pour but de supprimer l'inconvénient ci-dessus lié à la carbonisation de substances provenant de la cuisson de la viande.

Elle a pour objet un appareil électrique pour la cuisson d'aliments, notamment destiné à être placé sur une table entourée de convives, comportant des résistances électriques de chauffage par rayonnement et un support pour les aliments, les résistances électriques de chauffage par rayonnement étant disposées au-dessus du support pour les aliments et l'appareil étant totalement ouvert dans la région comprise entre les résistances de chauffage et le support ajouré, à l'exception d'au moins un montant vertical s'étendant entre un socle sur lequel repose le moyen de collecte et un capot supérieur supportant une plaque réfléchissante disposée au-dessus des résistances, caractérisé en ce que le support est ajouré pour évacuer vers le bas les graisses formées lors de la cuisson, ce support recouvrant un moyen de collecte des graisses.

Grâce à cet appareil, on évite qu'une partie de la grasse libérée par la cuisson vienne en contact avec une résistance chauffée à vif, et y soit carbonisée en produisant des fumées et des odeurs désagréables.

D'autres particularités et avantagês'de l'invention apparaîtront dans la description que l'on va donner maintenant, à titre non limitatif, de modes de réalisation de cette invention, en se référant aux dessins annexés sur lesquels :
- la figure 1 est une vue en perspective d'un premier mode de réalisation de l'invention ;
- la figure 2 est une vue en coupe longitudinale de l'appareil de la figure 1 ;
- la figure 3 est une vue en coupe transversale d'un deuxième mode de réalisation de l'appareil de l'invention; et
- la figure 4 est une vue en coupe transversale d'un troisième mode de réalisation de l'invention.

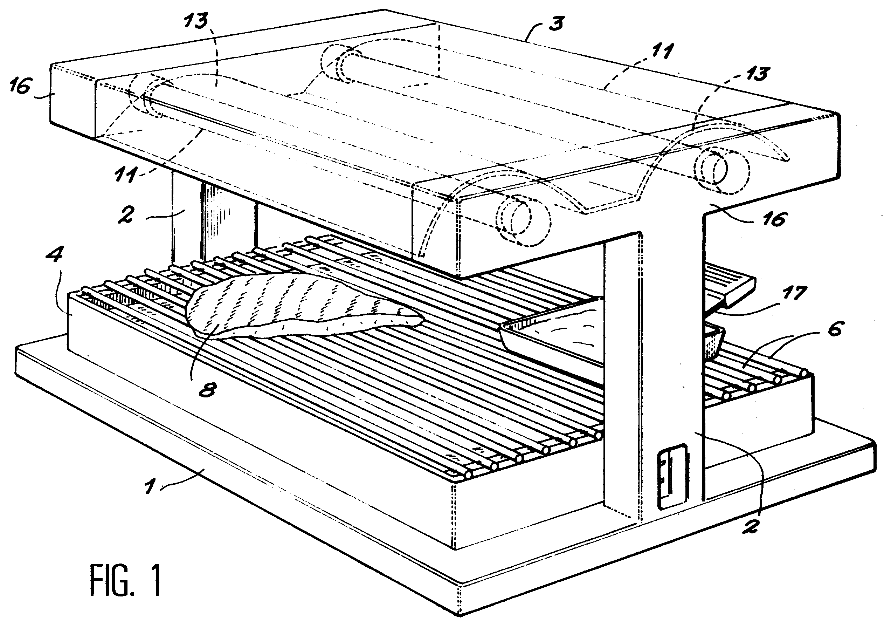

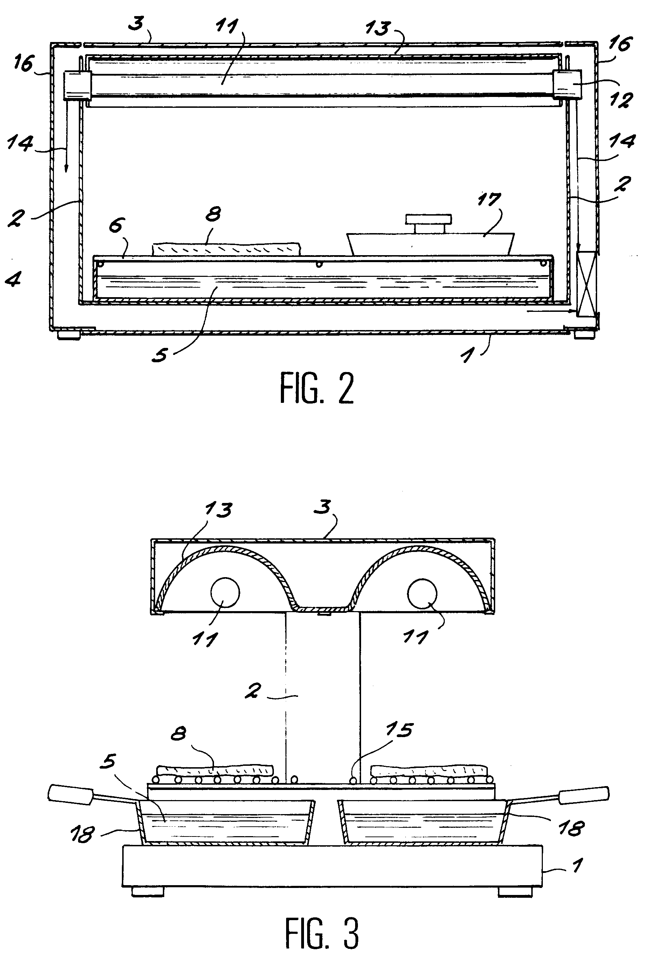

Le premier mode de réalisation de l'invention, représenté sur les figures 1 et 2, comprend un socle 1 par exemple en tôle emboutie, auquel sont fixés deux montants verticaux 2 supportant un capot supérieur 3. Un récipient 4 contenant de l'eau 5 est placé sur le socle 1 et porte un support ajouré formé par une grille 6 sur laquelle sont disposés les aliments à faire cuire 8, par exemple de la viande.

Le capot supérieur 3 supporte des résistances électriques de chauffage par rayonnement formées par des tubes quartz 11, terminés par des embouts céramiques 12, ainsi qu'une plaque réfléchissante 13 disposée entre le capot 3 et les tubes chauffants 11, destinée à renvoyer le rayonnement calorifique vers la grille 6. Les aliments 8 sont donc à distance des résistances 11. Cette distance est de l'ordre de 10 à 15 cm. Ces dernières sont reliées au réseau électrique par des conducteurs 14 s'étendant dans les montants 2. Des caches latéraux, par exemple en matière plastique 16 complètent l'appareil. Ainsi, l'appareil est totalement ouvert dans la région comprise entre les résistances de chauffage 11 et le support ajouré 16 à l'exception des deux montants verticaux 2. Cela permet à chaque convive de voir en permanence la cuisson des aliments lorsque l'appareil est posé sur une table.

Le fonctionnement de l'appareil ci-dessus ressort de la description qui précède.

Si l'on désire faire griller un morceau de viande 8 (voir figure 2), on le place sur la grille 6 et on met les résistances 11 sous tension. La partie supérieure de la viande, soumise au rayonnement calorifique qui provient directement des résistances 11 ou qui est réfléchi par la plaque 13, est grillée et les graisses ou jus en résultant s'écoulent à travers la grille 6 et tombent dans l'eau 5 du récipient 4, où ils sont refroidis instantanément, ce qui écarte tout risque d'émission de fumée, d'odeurs gênantes ou d'inflammations.

Etant donné que l'appareil de cuisson est largement ouvert latéralement, les convives placés autour d'une table peuvent facilement suivre la cuisson de leur viande et l'enlever de la grille 6 lorsque le degré de cuisson désiré est atteint.

Malgré le fait que l'appareil soit presque totalement ouvert sur ses côtés, aucune fumée ne s'y échappe, de sorte que l'appareil peut effectivement être utilisé à l'intérieur sur la table d'une salle à manger.

Par ailleurs, le socle 1 de l'appareil reste froid du fait qu'il est surmonté par un récipient 4 renfermant de l'eau, de sorte que ce socle 1 ne risque pas de brûler une nappe disposée sur la table.

D'autre part, le capot supérieur 3 de l'appareil qui recouvre les résistances 11 préserve les utilisateurs contre tout risque de brûlure.

Sur la partie droite de la figure 2, on a indiqué un autre mode d'utilisation de l'appareil. Un petit récipient 17 est disposé sur la grille 6 et l'on peut y faire cuire du fromage (préparation de la raclette). Dans ce cas, le problème des odeurs dues à la carbonisation des graisses ne se pose pas non plus.

La figure 3 représente une variante du premier mode de réalisation dans laquelle, au lieu du récipient unique 4 de collecte de graisses, on a prévu plusieurs récipients élémentaires de collecte 18 s'étendant chacun sous un support ajouré élémentaire 15, l'ensemble des supports élémentaires 15 jouant le rôle du moyen de support 6.

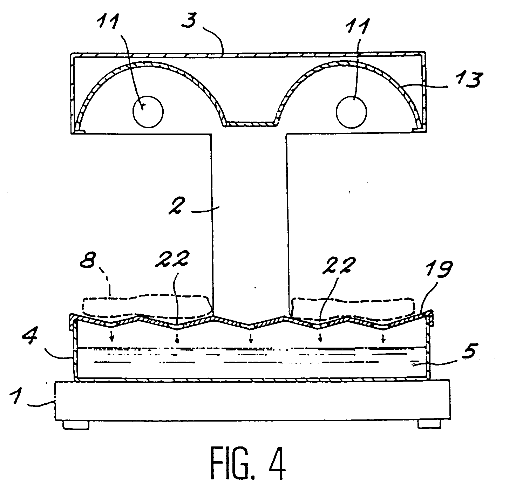

Dans un troisième mode de réalisation de l'invention (voir la figure 4), le moyen de support ajouré est constitué par une plaque métallique 19, par exemple en aluminium revêtu de polytétrafluoréthylène (PTFE) de couleur sombre, disposée sur le récipient 4, la plaque 19 est formée par emboutissage de manière à présenter des pentes d'écoulement avec, au bas de chaque pente, des orifices (fentes ou trous) 22 permettant au jus et aux graisses de tomber dans l'eau 5 du récipient 4.

Une telle plaque 19 offre une grande surface exposée au rayonnement infrarouge car elle n'est jamais totalement recouverte d'aliments et son revêtement la rend très absorbante thermiquement, ce qui lui permet d'atteindre la température nécessaire pour cuire la viande par le dessous. Ce mode de réalisation permet de griller par rayonnement la face supérieure des viandes et de cuire ou de précuire par contact la face inférieure.

Il va de soi que les différents modes de réalisation de l'invention peuvent être combinés de manière très économique puisque, en fonction de la nature de l'aliment à faire cuire, on peut modifier instantanément la partie basse de l'appareil si l'on dispose du sous-ensemble correspondant. En d'autres termes, l'appareil de l'invention peut être considéré comme associant une partie constante (socle, montants, partie haute chauffante) et une partie modifiable formée par l'un ou l'autre des sous-ensembles décrits, ces derniers jouant ainsi le rôle d'accessoires de l'appareil.

Bien entendu, l'invention n'est pas limitée aux exemples de réalisation que l'on vient de décrire, et on peut leur apporter de nombreuses modifications sans sortir du cadre des revendications.

## Revendications

1. Appareil électrique pour la cuisson d'aliments, notamment destiné à être placé sur une table entourée de convives, comportant des résistances électriques (11) de chauffage par rayonnement et un moyen de support (6, 15) pour les aliments (8, 17, 24), les résistances électriques (11) de chauffage par rayonnement étant disposées au-dessus du support (6, 15) pour les aliments et l'appareil étant totalement ouvert dans la région comprise entre les résistances de chauffage (11) et le support (6, 15) à l'exception d'au moins un montant vertical (2) s'étendant entre un socle (1) et un capot supérieur (3) supportant une plaque réfléchissante (13) disposée au-dessus des résistances (11), caractérisé en ce que le support (6, 15) est ajouré pour évacuer vers le bas les graisses formées lors de la cuisson, ce support recouvrant un moyen de collecte des graisses (4, 18).

2. Appareil conforme à la revendication 1, caractérisé en ce que le moyen de collecte des grasses (4, 18) repose lui-même sur le socle (1).

3. Appareil conforme à l'une des revendications 1 ou 2, caractérisé en ce que le moyen de collecte des grasses est un récipient (4) sur lequel est placé le support (6).

4. Appareil conforme à l'une des revendications 1 ou 2, caractérisé en ce que le moyen de collecte des graisses est formé de plusieurs récipients élémentaires (18) supportant chacun un support ajouré élémentaire (15).

5. Appareil conforme à l'une des revendications 1 à 4, caractérisé en ce que le support ajouré (6, 15) est une grille (6).

6. Appareil conforme à l'une des revendications 1 à 3, caractérisé en ce que le support ajouré est constitué par une plaque en aluminium (19) revêtu de polytétrafluoréthylène, cette plaque (19) présentant des pentes d'écoulement avec, au bas de chaque pente, des orifices (22) permettant aux graisses de tomber dans le récipient (4) et permettant au fait de son absorption thermique, de cuire par contact au moins partiellement la face inférieure de l'aliment (8).

7. Appareil conforme à l'une des revendications 1 à 6, caractérisé en ce que le support (6, 19) des aliments et le récipient de collecte (4, 18) sont disposés de façon amovible sur le socle (1).

## Claims

1. An electrical appliance for the cooking of food, more particularly intended for placing on a table surrounded by guests, comprising radiation heating electrical resistances (11) and a support means (6, 15) for the food (8, 17, 24), the radiation heating electrical resistances (11) being disposed above the support (6, 15) for the food and the appliance being completely open in the area contained between the heating resistances (11) and the support (6, 15), except for at least one vertical member (2) extending between a base (1) and a top hood (3) supporting a reflecting plate (13) disposed above the resistances (11), characterised in that the support (6, 15) is perforated to discharge in the downward direction the fat forming during the cooking, said support covering a fat collecting means (4, 18).

2. An appliance according to claim 1, characterised in that the fat collecting means (4, 18) itself rests on the base (1).

3. An appliance according to claim 1 or 2, characterised in that the fat collecting means is a container (4) on which the support (6) is placed.

4. An appliance according to claim 1 or 2, characterised in that the fat collecting means is formed by a plurality of elemental containers (18) each supporting an elemental perforated support (15).

5. An appliance according to any one of claims 1 to 4, characterised in that the perforated support (6, 15) is s grill (6).

6. An appliance according to any one of claims 1 to 3, characterised in that the perforated support is in the form of a polytetrafluoroethylene coated aluminium plate (19), the latter having run-off slopes with, at the bottom of each slope, orifices (22) allowing the fat to drop into the container (4) and, by virtue of its thermal absorption, allowing the bottom surface of the food (8) to be cooked by contact at least partially.

7. An appliance according to any one of claims 1 to 6, characterised in that the food support (6, 19) and the collecting container (4, 18) are arranged detachably on the base (1).

## Patentansprüche

1. Elektrisches Kochgerät für Speisen, insbesondere zum Aufstellen auf einem von Gästen umgebenen Tisch, mit elektrischen Widerständen (11) zur Heizung durch Wärmestrahlung und einem Unterlagemittel (6, 15) für die speisen (8, 17, 24), wobei die elektrischen Widerstände (11) zur Heizung durch Wärmestrahlung oberhalb der Unterlage (6, 15) für die Speisen angeordnet sind und das Gerät in dem Bereich zwischen den Heizwiderständen (11) und der Unterlage (6, 15) völlig offen ist, mit Ausnahme von wenigstens einer Vertikalstütze (2), die sich zwischen einem Sockel (1) und einer Oberhaube (3) erstreckt, welche eine oberhalb der Widerstände (11) angeordnete Reflexionsplatte (13) trägt, dadurch gekennzeichnet, daß die Unterlage (6, 15) durchbrochen ist, um das beim Braten gebildete Fett nach unten abzuführen, wobei diese Unterlage ein Auffangmittel für Fett (4, 18) überdeckt.

2. Gerät nach Anspruch 1, dadurch gekennzeichnet, daß das Auffangmittel für Fett (4, 18) selbst auf dem Sockel (1) ruht.

3. Gerät nach einem der Ansprüche 1 oder 2, dadurch gekennzeichnet, daß das Auffangmittel für Fett ein Behälter (4) ist, auf welchem die Unterlage (6) angeordnet ist.

4. Gerät nach einem der Ansprüche 1 oder 2, dadurch gekennzeichnet, daß das Auffangmittel für Fett aus mehreren Einzelbehältern (18) gebildet ist, die jeder eine durchbrochene Einzelunterlage (15) tragen.

5. Gerät nach einem der Ansprüche 1 bis 4, dadurch gekennzeichnet, daß die durchbrochene Unterlage (6, 15) ein Rost (6) ist.

6. Gerät nach einem der Ansprüche 1 bis 3, dadurch gekennzeichnet, daß die durchbrochene Unterlage aus einer mit Polytetrafluorethylen überzogenen Aluminiumplatte (19) gebildet ist, wobei die Platte (19) Ablaufschrägen mit Öffnungen (22) am Boden jeder Schräge aufweist, die gestatten, daß das Fett in den Behälter (4) abtropfen kann, und aufgrund ihrer thermischen Absorption gestatten, durch Kontakt wenigstens einen Teil der Unterseite der Speise (8) zu braten.

7. Gerät nach einem der Ansprüche 1 bis 6, dadurch gekennzeichnet, daß die Unterlage (6, 19) der Speisen und der Auffangbehälter (4, 18) auf dem Sockel (1) abnehmbar angeordnet sind.
